# EUROPEAN PATENT APPLICATION

(11) **EP 2 887 295 A1**
(43) Date of publication of application: **24.06.2015**
(21) Application number: 14182827.7
(22) Date of filing: 29.08.2014
(51) Int. Cl.: G06Q 30/02, G06Q 30/06

(54) **Mobile device assisted service**

(30) Priority: 20.12.2013 US 201314135953
(71) Applicant: NCR Corporation, Duluth, GA 30096 (US)
(72) Inventor: Irizari, John, Cebu City (PH)
(74) Representative: MacLeod, Roderick William

(57) **Abstract**

A clerk of an establishment carries a portable device when servicing a customer. The portable device is operable to: acquire loyalty details including preferences for the customer; initiate, monitor, and/or complete transactions with the customer; broadcast the loyalty and transaction details to staff of the establishment, and receive status details for the transaction from the staff.

## Description

Enterprises have become hyper competitive with one another in the pursuit of customers and customer loyalty. Technological advancements have permitted enterprises to become even more creative in with their efforts to satisfy the customers.

Moreover, technology has also been integrated within enterprises to make the enterprises more operationally efficient and to reduce staffing needs and expenses of those enterprises.

For example, enterprises are leveraging mobile phones of customers to: deliver promotions, take surveys, earn loyalty points, provide services to customer, and conduct transactions with the enterprise.

In addition, staff or agents of the enterprises can use mobile technology to pull up and access enterprise information by either accessing websites from mobile devices or by utilizing mobile applications on their mobile devices to access the enterprise information.

One industry that has embraced mobile technology is the hospitality industry. Customers can now order from phones and tablets at restaurants, check-in and check-out of hotels via mobile device, and perform a variety of other interactions with the hospitality industry using mobile technology.

Additionally, the staff of the hospitality industry utilizes mobile technology as they work and interact with customers, such as a clerk with a tablet that can check-in or check-out a customer.

However, even with the integration of mobile technology in the hospitality industry, interactions between the staff and customers still remains largely impersonal and, at times, inefficient.

In various embodiments, methods and Point-Of-Sale (POS) device for mobile device assisted service are presented.

According to an embodiment, a method for mobile device assisted service is provided. Specifically, customer data is acquired for a customer and at least one customer detail is requested for the customer based on the customer data. Next, the at least one customer detail is used to conduct a transaction with the customer.

According to a first aspect of the present invention there is provided a method comprising: acquire, via a mobile device, customer data for a customer; requesting, via the mobile device, at least one customer detail based on the customer data; and using, via the mobile device, the at least one customer detail to conduct a transaction with the customer.

Optionally, the step of acquiring further includes obtaining the customer data as a photograph taken of a face of the customer by a camera of the mobile device.

Optionally, the step of acquiring further includes obtaining the customer data as an image of a loyalty card taken from a camera of the mobile device.

Optionally, the step of acquiring further includes obtaining the customer data as a scanned image of a bar code (such as a 1 D barcode, a 2D barcode (which may comprise a Quick Response (QR) code) or the like) taken from a scanner of the mobile device.

Optionally, the step of requesting further includes sending the request with the customer data to a loyalty system to resolve an identity for the customer and receive the at least one customer detail.

Optionally, the step of using further includes presenting the at least one loyalty detail within one or more displays associated with the mobile device for viewing.

Optionally, the method further comprises broadcasting, via the mobile device, the at least one customer detail and at least one transaction detail for the transaction to one or more Point-Of-Sale (POS) devices associated with an establishment where the transaction occurs.

Optionally, the method further comprises receiving, via the mobile device, at least one of: a status and an inquiry regarding the transaction from the one or more POS devices for resolution with the customer during the transaction.

According to a second aspect of the present invention there is provided a Point-Of-Sale (POS) system comprising: a display; and a customer service software module operable to (i) receive customer data for a customer, (ii) resolve at least one customer detail for the customer, (iii) present the at least one customer detail on the display, and (iv) use the at least one customer detail to initiate and conduct a transaction with the customer.

Optionally, the POS device comprises eyewear that is processor and networked enabled.

Optionally, the POS device is one of: a tablet and a smartphone.

Optionally, the customer service software module is further operable to receive at least one of a status update and an inquiry regarding the transaction from at least one other POS device.

Optionally, the customer service software module is further operable in (i) to obtain the customer data as a photograph of the customer.

Optionally, the customer service software module is further operable in (ii) to interact with a loyalty system to resolve the at least one customer detail.

Optionally, the customer service software module is further operable in (ii) to acquire the at least one customer detail as a loyalty profile having at least one preference of the customer relevant to the transaction.

According to a third aspect of the present invention there is provided a method comprising: receiving, via a Point-Of-Sale (POS) device, a photograph for a customer, at least one loyalty detail for the customer, and at least one transaction detail for a transaction of the customer; and sending, via the POS device, a request regarding the at least one transaction detail to a mobile device.

Optionally, the step of receiving further includes obtaining the photograph and the at least one transaction detail from the mobile device.

Optionally, the step of receiving further includes obtaining the at least one loyalty detail from one of: the mobile device and a loyalty system.

Optionally, the step of receiving further includes presenting the photograph, the at least one loyalty detail, and the at least one transaction detail on a display associated with the POS device.

Optionally, the method further comprises: receiving, via the POS device, a response from the mobile device to the request.

Optionally, the method further comprises: receiving, via the POS device a specialized request regarding the at least one transaction detail from the mobile device.

These and other aspects of the present invention will become apparent from the following specific description, given by way of example, with reference to the accompanying drawings.
FIG. 1 is a diagram of an example architecture for practicing mobile device assisted service at an enterprise, according to an example embodiment.
FIG. 2 is a diagram of a method for mobile device assisted service, according to an example embodiment.
FIG. 3 is a diagram of another method for mobile device assisted service, according to an example embodiment.
FIG. 4 is a diagram of a Point-Of-Sale (POS) system, according to an example embodiment.

### Detailed Description

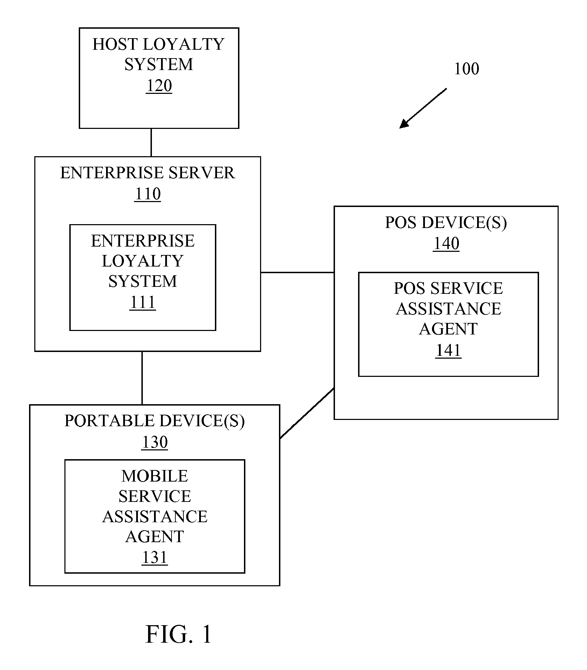

FIG. 1 is a diagram of an example architecture 100 for practicing mobile device assisted service at an enterprise, according to an example embodiment. It is to be noted that the enterprise server 110 is shown schematically in greatly simplified form, with only those components relevant to understanding of this embodiment being illustrated. The same situation is true for the host enterprise loyalty system 120, the portable device(s) 130, and the Point-Of-Sale (POS) device(s) 140. The various components of the enterprise server 110, the host loyalty system 120, the portable device(s) 130, and the POS device(s) 140, which are not depicted would be readily appreciated and understood by one of ordinary skill the art.

Furthermore, the various components (that are identified in the FIG. 1) are depicted and the arrangement of the components is presented for purposes of illustration only. It is to be noted that other arrangements with more or less components are possible without departing from the mobile device assisted service mechanisms presented herein and below.

The methods and POS system presented herein and below for mobile device assisted service can be implemented in whole or in part in one, all, or some combination of the components shown with the architecture 100. The methods and POS system are programmed as executable instructions in memory and/or non-transitory computer-readable storage media and executed on one or more processors associated with the components.

Specifically, the architecture 100 permits mobile device assisted service that may be initiated by personnel of an enterprise using the portable device 130 (may also be referred to herein as "mobile device" or "portable mobile device) when making an initial and subsequent contacts with a customer at the enterprise. The mobile service assistance agent 131 permits a customer identity and, perhaps, a customer photograph to be tied to the customer while at the enterprise. Resolution of the customer identity and, in some cases the customer photograph, can be obtained by the mobile service assistance agent 131 from the enterprise loyalty system 111 of the enterprise server 110. A transaction (such as, by way of example, a food order at a restaurant) can be initiated for the customer at the enterprise by the mobile service assistance agent communication with one or more POS devices 140, each POS device 140 having an instance of the POS service assistance agent 141. Thus, all staff at the enterprise associated with the customer transaction taking place can see the customer photograph, customer identity, transaction status and details, and, perhaps other customer loyalty information, such as profile data for preferences of the customer. Each time a particular staff member of the enterprise makes contact with the customer, all the above-mentioned details is available to that staff on that staff's POS device 140 or that staff's portable device 130. In this way, customer service is customized and made more efficient for the customer while transaction at the enterprise.

In an embodiment, the portable device(s) 130 can also operate as POS device(s) 140 within the enterprise. So, the portable device(s) 130 can be used to initiate and complete a customer transaction.

In an embodiment, at least one portable device(s) 130 is a wearable processing device, such as glasses, watch, and others. In a particular case, at least one portable device is processor and network-enabled eyewear, such as Google Glass®. In another embodiment, the portable device 130 is a tablet. In still another embodiment, the portable device 130 is a smartphone.

In some instances, the enterprise server 130 may lack its own enterprise loyalty system 111 or may need to acquire loyalty information for a customer from partnering enterprise. This is achieved by the enterprise server 130 interacting with interfaces of a host loyalty system 120.

The various details and embodiments for these techniques, in view of the components within the architecture 100, are now presented with reference to the FIG. 1 within the context of the restaurant industry. Although, it is to be noted that other embodiments of the invention are not to be strictly tied to the restaurant industry as any retail industry (including other hospitality industries besides the restaurant industry), government agency, or organization can benefit from the teachings presented herein to provide mobile device assisted service to a customer using a portable device 130 of enterprise personnel for an enterprise.

The architecture 100 includes: an enterprise server 110; optionally, a host loyalty system 120; one or more portable device(s) 130; and one or more POS devices 140. The enterprise server 110 includes an enterprise loyalty system 111. The portable device(s) 130 includes a mobile service assistance agent 131. The POS device(s) 140 includes a POS service assistance agent 141. Each of these components will now be discussed in turn followed by some more detailed operational examples for the architecture 100 of the FIG. 1 within a context relevant to the restaurant industry.

In an embodiment, the enterprise server 110 can be a server 110 that is geographically remote and external to a processing environment associated with the POS device(s) 140 (the server 110 connected in a Wide-Area Network (WAN) with the POS device(s) 140). In some cases for this latter embodiment, the enterprise server 110 can be geographically dispersed over multiple network connections but managed as one logical server 110, such as a cloud. In other situations, the enterprise server 110 can be contained at one site on one or more machines associated with an enterprise that operates and/or manages the enterprise server 110.

In another case, the enterprise server 110 resides within a local processing environment that is local to the POS device(s) 140 (server 110 connected in a Local Area Network (LAN) with the POS device 140). In this case, the portable device(s) can also connect to the enterprise server 110 within the LAN.

The enterprise server 110 includes an enterprise loyalty system 111. The enterprise loyalty system 111 is one or more software module(s) that execute on processors of the enterprise server 110.

During operation, the enterprise loyalty system 111 receives requests from: the mobile service assistance agent 131 of the portable device(s) 130, and/or the POS service assistance agent 141 of the POS device(s). The requests can include some identifying information that permits the enterprise loyalty system 111 to locate a customer record in a loyalty data store (not shown in the FIG. 1) and return some loyalty details associated with the customer to the requestor (mobile service assistance agent 131 or POS service assistance agent 141).

The loyalty details can include a variety of information, such as but not limited to: a customer name, a customer profile (preference settings), a loyalty level associated with the customer within the enterprise loyalty system 111, a customer photograph, age of the customer, birthdate of the customer, residential address of the customer, transaction history with the enterprise for the customer, spouse/partner name, family members, photos of spouse/partner and/or family members, payment details, loyalty points, available promotions that the customer can use at the enterprise, and the like. The customer profile can include such things as, by way of example only, preferred food items, food allergies, preferred beverages, preferred method of payment, preferred personnel at the establishment that the customer wants to be waited on by, preferred goods or service of the customer, preferred upsell promotions, preferred manner the customer likes certain food items cooked (rare for fish, well done for meat, etc.), and the like.

In some instances, the enterprise server 110 may lack a locally accessible enterprise loyalty system 111. In such a case, the enterprise server 110 uses a host interface (not shown in the FIG. 1) to acquire the loyalty details (including profile of the customer) from an external host loyalty system 120. It may also be that the enterprise associated with the enterprise server honors a partnering enterprise's loyalty customers. In such a case, the enterprise server 110 can use the host interface to acquire the loyalty details from the host system 120.

The host system 120 can be any system that provides loyalty details for a particular customer. This is external to the enterprise server 110, and in some embodiments, the host system 120 resides in a cloud processing environment. So, the host system 120 may be a cloud software service that provides loyalty details for customers associated with multiple different enterprises.

The architecture 100 also includes one or more portable device(s) 130. In an embodiment, at least one of the portable device(s) 130 is a processor and network-enabled eyewear (such as Google Glass®). In other embodiments, the portable device 130 can be a tablet, a smartphone, a laptop, or a different wearable processing device (such as a watch).

According to an embodiment, the portable device 130 is one of the POS devices 140. (So, the portable device 130 can be subsumed as a single POS device 140 (not shown in the FIG. 1).)

The portable device 130 includes the mobile service assistance agent 131. The mobile service assistance agent 131 is configured to perform a variety of features to initiate transactions (orders in the present embodiment for the restaurant industry), place orders, monitor orders, and complete payment for the orders.

To do this, the mobile service assistance agent 131 is operable to connect to the enterprise server 110 and the POS device(s) within a restaurant (type of enterprise establishment) where the waiter who operates and carries the portable device 130. This permits two-way communication between the mobile service assistance agent 131 and the enterprise loyalty system 111 and two-way communication between the mobile service assistance agent 131 and the POS service assistance agent 141.

So, the mobile service assistance agent 131 can identify the customer and acquire loyalty details (including the customer profile) from the enterprise loyalty system 111 and take an order for the customer, via inputs through an interface of the mobile service assistance agent 131 provided by the waiter. Next, this information can be relayed to one or more of POS device(s) 140 via each POS device's instance of its POS service assistance agent 141. Now, every relevant member of the restaurant (hostess, checkout clerk, kitchen staff, and busboy) can address the customer by name and provide status for the customer's order when approaching the customer or when asked by the customer.

The mobile service assistance agent 131 can also provide the waiter with access to applications that provide information that may be requested or desired by the customer. This can also be done via a customized web browser limited to those sites that provide the relevant information. For example, suppose the customer wants directions somewhere, a recommendation for events in the area, a weather forecast, reviews for certain establishments of interest to the customer, and others types of relevant information. In this manner, the waiter can use the mobile service assistance agent 131 to provide near instantaneous answers to customer inquiries while serving the customer at the restaurant.

Still another optional component of the architecture 100 is the POS device(s) 140. In an embodiment, one POS device 140 is a standalone terminal that is operated by a cashier, accessible to waiters, or accessible to others within the restaurant. In still another situation, the POS device 140 is a mobile device, such as a portable device 130 (discussed above that the portable device 130 can also be the POS device 140. It may also be that the POS device 140 is a local server that services multiple POS thin clients (having displays and input mechanisms) at the restaurant.

The POS device 140 includes a POS service assistance agent 141. The POS service assistance agent 141 can communicate with the mobile service assistance agent 131 and the enterprise loyalty system 111. In an embodiment, the POS service assistance agent 141 interacts with the enterprise loyalty system 111 to provide loyalty details for the customer to the mobile service assistance agent 131. In an embodiment, the POS service assistance agent 141 communications status details related to the customer's order to one or more other instances of the POS service assistance agent 141 on one or more other POS device(s) 140 and/or communicates the status details to the mobile service assistance agent 131 on the portable device 130, which is operated by the waiter taking the customer's order.

A more detail restaurant example for an embodiment of the architecture 100 is now presented for further illustration.

Consider that a waiter is wearing eyewear, such as Google Glass® (portable device 130) having an instance of the mobile service assistance agent 131 executing thereon. A customer enters the restaurant where the waiter is working and takes a seat at table being serviced by the waiter. The waiter is able to capture a picture of the customer via the modified version of the Google Glass® 130 (modified to include the executing instance of the mobile service assistance agent 131). The mobile service assistance agent 131 contacts the enterprise loyalty system 111 directly or indirectly with the assistance of one of the POS device(s) 140 and provides the picture to the enterprise loyalty system 111. The enterprise loyalty system 111 detects (based on facial recognition) a match to the picture to a particular customer and acquires loyalty details (as discussed above) back to the mobile service assistance agent 131 or to the POS device 140 (where the loyalty details are supplied by the POS device 140 to the mobile service assistance agent 131).

The waiter then uses the mobile service assistance agent 131 of the modified Google Glass® 130 to take the customer's food order; perhaps making suggestions based on the returned profile in the loyalty details for the customer. The waiter is now also equipped to address the customer by name, and may, perhaps, know and address members of the customer's part (also based on the loyalty details - spouse/partner and family member names and photos included as part of the loyalty details). Taking the order generates an order number and table number where the customer is situated as well as an identifier for the waiter (waiter name or number). Any information requested by the customer can be readily answered by the waiter, via the mobile service assistance agent 131.

The loyalty details and order details (order number, table number, waiter identifier, and ordered food) are broadcast by the mobile service assistance agent 131 to instances of the POS service assistance agents 141 on their POS devices 140.

At least one instance of the POS service assistance agents 141 and/or the mobile service assistance agent 131 can also push the loyalty details and the order details to all other portable devices 130, via their instances of the mobile service assistance agents 131 within the restaurant. So, now every staff member including waiters not servicing the customer directly has the loyalty details and order details for the customer.

Any staff or waiter can address the customer by name, know what they ordered, know their preferences (via the profile in the loyalty details), and report status for the order upon request of the customer.

As staff members (such as the kitchen cooks) work on the order, they can provide updates via one of the POS devices 140 using that POS device's mobile service assistance agent 141. Also, questions that cook may have or information that the cook may want to report (out of some ordered food item) can be provided and immediately delivered to the waiter's modified Google Glass® 130. This permits the waiter to communicate the issue and resolve the questions without having to wait to appear in the kitchen before becoming aware of these things. This permits for more timely and quality service of the customer by the restaurant.

At any point, the waiter is also equipped to again supply the customer with requested information relevant to the customer.

Upon conclusion of the customer's dining, the checkout process can also be handled via the modified Google Glass® 130, perhaps, using an automated payment method authorized by the customer in the customer's profile or by processing the payment card via the Google Glass® 130 at the customer's table.

It is now apparent how the mobile service assistance architecture 100 and its components can be used to: more efficiently serve customers of an enterprise, reduce customer service errors, and improve an overall experience of the customer while at the enterprise.

In fact, a myriad of uses can be achieved with the teachings herein where mobile service assisted services are provided at establishments for improving customer interactions while at those enterprises.

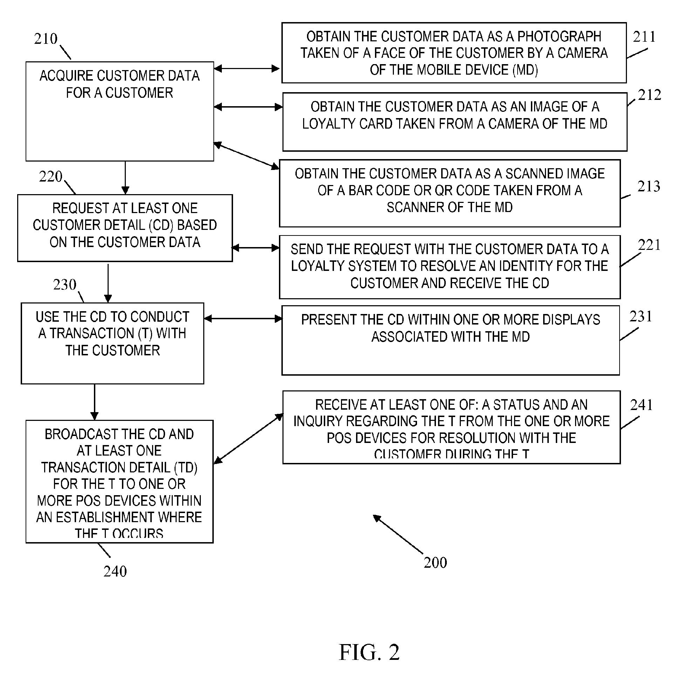

Some additional embodiments and details and in some cases enhanced perspective of what has already been described are now presented with the discussion of the FIGS. 2 - 4.

FIG. 2 is a diagram of a method 200 for mobile device assisted service, according to an example embodiment. The software module(s) that implements the method 200 is referred to as a "mobile service manager." The mobile service manager is implemented as executable instructions programmed and residing within memory and/or a non-transitory computer-readable (processor-readable) storage medium and executed by one or more processors of a device. The processors of the device that execute the mobile service manager are specifically configured and programmed to process the mobile service manager. The mobile service manager has access to one or more networks during its processing. The networks can be wired, wireless, or a combination of wired and wireless.

In an embodiment, the device that executes the server customized analytics manager is a portable device, such as portable device 130 presented above with respect to architecture 100 of the FIG. 1.

According to an embodiment, the device that executes the mobile service manager is a processor and network-enabled eyewear, such as a modified Google Glass®.

In another embodiment, the device that executes the mobile service manager is a tablet, a smartphone, or other wearable processing device.

In an embodiment, the mobile service manager is the mobile service assistance agent 131 discussed in detail above with the architecture 100 of the FIG. 1.

At 210, the mobile service manager acquires customer data for a customer. The customer data is some type of information that permits the customer to be identified in a loyalty system (such as loyalty systems 111 and 120 of the architecture 100 for the FIG. 1).

For example, at 211, the mobile service manager obtains the customer data as a photograph taken of a face of the customer by a camera interfaced to the mobile device. This can be done by a wearable processing device as discussed above or by any mobile processing device with an integrated camera. The data can be used to find a match in a loyalty system (111 and/or 120) and identify the customer.

In another case, at 212, the mobile service manager obtains the customer data as an image of a loyalty card taken from a camera of the mobile device. So, the customer presents a loyalty card to a clerk of an enterprise and the clerk uses the mobile device to capture an image of the card and send it to a loyalty system (111 and/or 120) to identify the customer.

In yet another situation, at 213, the mobile service manager obtains the customer data as a scanned image of a bar code or Quick Response (QR) code taken from a scanner interfaced to the mobile device. This too can be achieved via a wearable processing device or any mobile device having an integrated scanner. This may be useful when the customer has the bar code or QR code on an application on his/her phone that can be presented on the display of the phone and scanned by the mobile device or when the code is on a card affixed to a keychain of the customer.

At 220, the mobile service manager requests at least one customer detail based on the customer. The customer detail can be any of the information discussed above with respect to the loyalty details. In an embodiment, the customer detail is a profile having preferences for the customer (the profile can include a customer name - and the profile was discussed above as well).

According to an embodiment, at 221, the mobile service manager sends the request with the customer data to a loyalty system (111 and/or 120) to resolve an identity for the customer and receive the at least one customer detail. The customer data was described above.

At 230, the mobile service manager uses the at least one customer detail to conduct a transaction with the customer. The manner of the transaction conducted was discussed in detail above with reference to the architecture 100 of the FIG. 1.

In an embodiment, at 231, the mobile service manager presents the at least one loyalty detail within one or more displays associated with the mobile device for viewing. When the customer data is a photograph of the customer it too may be presented on a same display or different display of the mobile device.

According to an embodiment, at 240, the mobile service manager broadcasts the at least one customer detail and at least one transaction detail (discussed above as order details; although transaction details can include information relevant to other transactions not necessarily associated with a restaurant transaction) for the transaction to one or more POS devices associated with an establishment where the transaction occurs. As discussed above, this permits all or selective staff of the establishment where the transaction occurs to be engaged in customized service for the customer while at the establishment.

In another case of 240 and at 241, the mobile service manager receives at least one of: a status and an inquiry regarding the transaction from the one or more POS devices for resolution with the customer. So, the mobile service manager can receive real time updates and requests regarding the staff of the establishment working on the transaction of the customer.

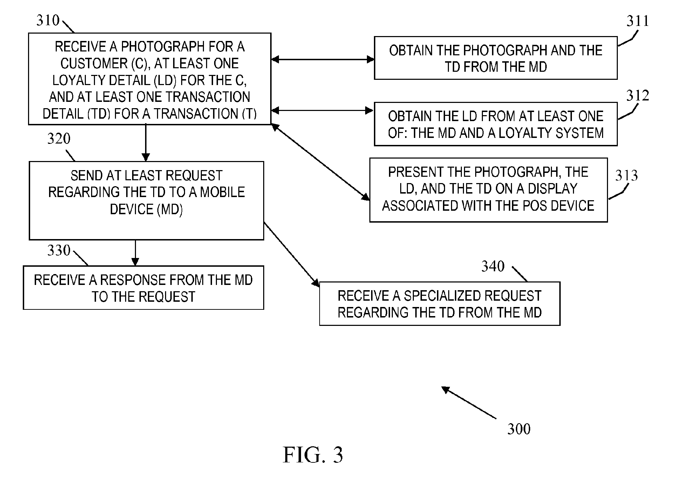

FIG. 3 is a diagram of another method 300 for mobile device assisted service, according to an example embodiment. The software module(s) that implements the method 300 is referred to as a "POS server manager." The POS server manager is implemented as executable instructions programmed and residing within memory and/or a non-transitory computer-readable (processor-readable) storage medium and executed by one or more processors of a POS device. The processors of the POS device that executes the POS server manager are specifically configured and programmed to process the POS server manager. The POS server manager has access to one or more networks during its processing. The networks can be wired, wireless, or a combination of wired and wireless.

In an embodiment, the POS device that executes the POS customized analytics manager is the POS device 140 presented above with respect to architecture 100 of the FIG. 1. The POS device can be local to the processing environment of the enterprise server 110 of the FIG. 1 or can be remote to the local processing environment of the enterprise server 110 of the FIG. 1.

In an embodiment, the POS device is a standalone cashier-assisted terminal operated by a clerk. In an embodiment, the POS device is a sever that services multiple different instances of the POS server manager operating on each POS device. According to an embodiment, the POS device is a mobile device carried around a particular establishment.

In an embodiment, the POS server manager is the POS service assistance agent 141 of the FIG. 1.

At 310, the POS server manager receives a photograph for a customer, at least one loyalty detail for the customer, and at least one transaction detail for a transaction of the customer with an establishment to which the POS device is situated having the POS server manager. The loyalty details and the transaction details (e.g., order details, etc.) were discussed above with FIGS. 1 - 2.

In an embodiment, at 311, the POS server manager obtains the photograph and the at least one transaction detail from the mobile device, as discussed above with reference to the FIGS. 1-2.

According to an embodiment, at 312, the POS server manager obtains the at least one loyalty detail (discussed in the FIG. 1) from the mobile device or a loyalty system (111 and/or 120).

In one case, at 313, the POS server manager presents the photograph, the at least one loyalty detail, and the at least one transaction detail on a display associated with the POS device for viewing by all or selective staff of the establishment servicing the transaction for the customer.

At 320, the POS server manager sends a request regarding the at least one transaction detail to a mobile device, such as the portable device 130 of the FIG. 1 and the device that executes the method 200 of the FIG. 2. In an embodiment, the request is at least one of: an inquiry regarding the at least one transaction detail and a status regarding the at least one transaction detail.

According to an embodiment, at 330, the POS server manager receives a response from the mobile device for the request, either answered by the clerk servicing the customer or answered by the customer and provided by the clerk, via the mobile device. So, two-way automated interaction can occur within the establishment when servicing the customer without requiring multiple staff to meet and communicate in face with one another and the customer.

In another embodiment of 330 and at 331, the POS server manager receives a specialized request regarding the at least one transaction detail from the mobile. For example, the customer may want to add something to the transaction, modify something, or remove something. So, communication can be initiated from the mobile device to the POS server manager.

It is also to be noted that multiple instances of the POS server manager can be executing within the establishment where the customer is being serviced for a transaction. Each POS server manager instance executing on a different POS device within the establishment. In this way, all or selective staff has personal and customized access to the transaction for assisting the customer when needed or for informing the customer about the transaction when needed.

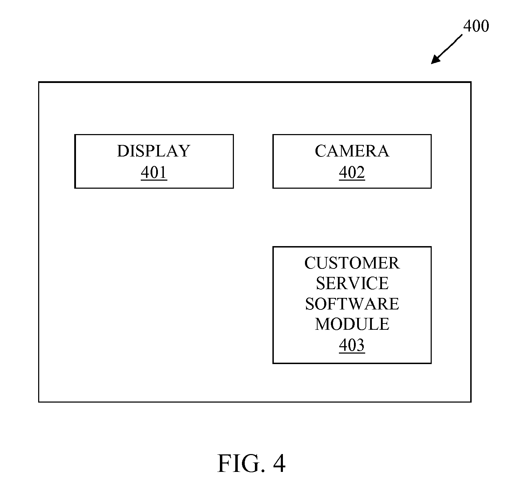

FIG. 4 is a diagram of a Point-Of-Sale (POS) system 400, according to an example embodiment. The POS system 400 includes a software module(s) programmed and residing within memory and/or a non-transitory computer-readable medium and that execute on one or more processors of the POS system 400 or processors of other devices interfaced to the POS system 400. The POS system 400 has access and can communicate over one or more networks; and the networks can be wired, wireless, or a combination of wired and wireless.

The POS system 400 includes a display 401, a camera 402, and a customer service software module 403, which is programmed within memory and/or a non-transitory computer-readable storage media as executable instructions of the POS system 400.

The POS system 400 is operable to perform and manage customer transactions and is a portable device, such as portable device 130 and/or 140 of the architecture 100.

In an embodiment, the POS system 400 includes a processor and network-enabled eyewear, such as a modified version of the Google Glass®.

In an embodiment, the POS system 400 comprises a smartphone.

According to an embodiment, the POS system 400 is a tablet.

In still another case, the POS system 400 is a processor and networked-enabled watch.

In an embodiment, the customer service software module 403 is the mobile service assistant agent 131 or the POS service assistance agent 141 of the FIG. 1.

The customer service software module 403 is operable to: receive customer data for a customer; resolve at least one customer detail for the customer based on the customer data, present the at least one customer detail on the display 402, and use the at least one customer detail to initiate and conduct a transaction with the customer.

According to an embodiment, the customer service software module 403 is further operable to receive at least one of: a status update and an inquiry regarding the transaction from at least one other POS device. This was presented at length above with reference to the FIGS. 1 - 3.

In another situation, the customer service software module 403 is further operable to receive the customer data by obtaining the customer data as a photograph for the customer. Such as by using a camera interfaced to or integrated within the POS system 400.

In an embodiment, the customer service software module 403 is further operable to resolve the at least one customer detail as at least one loyalty detail by interacting with a loyalty system (111 and/or 120).

In another case of the latter embodiment, the customer service software module 403 is further operable to resolve the at least one customer detail as a loyalty profile having at least one preference for the customer relevant to the transaction. For example, customer is allergic to peanuts do not get his food near them.

One now appreciates how a mobile device assisted service can be provided to a customer at an establishment to improve: the timeliness of the service, the quality of the service, and the overall experience of the customer's perceived service while at the establishment.

It should be appreciated that where software is described in a particular form (such as a component or module) this is merely to aid understanding and is not intended to limit how software that implements those functions may be architected or structured. For example, modules 131 and 134 are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A method comprising:
acquiring, via a mobile device, customer data for a customer (step 210);
requesting, via the mobile device, at least one customer detail based on the customer data (step 220); and
using, via the mobile device, the at least one customer detail to conduct a transaction with the customer (step 230).

2. The method of claim 1, wherein acquiring further includes obtaining the customer data as a photograph taken of a face of the customer by a camera of the mobile device (step 240).

3. The method of claim 1 or 2, wherein acquiring further includes obtaining the customer data as an image of a loyalty card taken from a camera of the mobile device (step 212).

4. The method of any preceding claim, wherein acquiring further includes obtaining the customer data as a scanned image of a bar code taken from a scanner of the mobile device (step 213).

5. The method of any preceding claim, wherein requesting further includes sending the request with the customer data to a loyalty system to resolve an identity for the customer and receive the at least one customer detail (step 221).

6. The method of any preceding claim, wherein using further includes presenting the at least one customer detail within one or more displays associated with the mobile device for viewing (step 231).

7. The method of any preceding claim, further comprising, broadcasting, via the mobile device, the at least one customer detail and at least one transaction detail for the transaction to one or more Point-Of-Sale (POS) devices associated with an establishment where the transaction occurs (step 240).

8. The method of claim 7 further comprising, receiving, via the mobile device, at least one of: a status and an inquiry regarding the transaction from the one or more POS devices for resolution with the customer during the transaction (step 241).

9. A Point-Of-Sale (POS) device (400) comprising:
a display (401); and
a customer service software module (403) operable to (i) receive customer data for a customer, (ii) resolve at least one customer detail for the customer, (iii) present the at least one customer detail on the display (401), and (iv) use the at least one customer detail to initiate and conduct a transaction with the customer.

10. The POS device of claim 9, wherein the POS device (400) comprises eyewear that is processor and networked enabled.

11. The POS device of claim 9, wherein the POS device (400) is one of: a tablet and a smartphone.

12. The POS device of any of claims 9 to 11, wherein the customer service software module (403) is further operable to receive at least one of a status update and an inquiry regarding the transaction from at least one other POS device.

13. The POS device of any of claims 9 to 12, wherein the customer service software module (403) is further operable in (i) to obtain the customer data as a photograph of the customer.

14. The POS device of any of claims 9 to 13, wherein the customer service software module (403) is further operable in (ii) to interact with a loyalty system to resolve the at least one customer detail.

15. The POS system of any of claims 9 to 14, wherein the customer service software module (403) is further operable in (ii) to acquire the at least one customer detail as a loyalty profile having at least one preference of the customer relevant to the transaction.
